# EUROPEAN PATENT APPLICATION

(11) **EP 4 480 561 A1**
(43) Date of publication of application: **25.12.2024**
(21) Application number: 24183636.0
(22) Date of filing: 21.06.2024
(51) Int. Cl.: B01D 1/00, B01D 3/00, B01D 3/42, B01D 5/00, C02F 1/04, C02F 1/16

(54) **APPARATUS AND METHOD FOR PURIFYING CONTAMINATED LIQUIDS**

(30) Priority: 23.06.2023 IT 202300013032
(71) Applicant: Boaglio, Barbara Margherita Mercedes, 15020 Murisengo (AL) (IT)
(72) Inventor: BOAGLIO, Fulvio, 1090 Vienna (AT)
(74) Representative: Maroscia, Antonio

(57) **Abstract**

An apparatus for purifying contaminated liquids, comprising a boiler (2) adapted to receive a contaminated liquid (L), a first heat exchanger (8) configured to heat the contaminated liquid and evaporate it, a collection duct (9) for collecting the steam produced in the boiler, a second exchanger (11) configured to increase the saturation of the steam coming from the collection duct (9), a condenser (12) in fluidic communication with the second heat exchanger (11) and having a discharge duct (12) for the condensed and purified liquid (C). There is provided a third heat (15) adapted to receive heat from an auxiliary circuit (18) crossed by the exchange fluid arranged in contact with an external heat source (S) and transfer the heat to the steam coming from the collection duct (9) and superheat it before entering into the second heat exchanger (11). The auxiliary circuit (18) is configured to be temporarily in fluidic communication with the first exchanger (8) and in fluidic communication with the third exchanger (15) at steady-state operation to superheat the steam before conveying it to the second exchanger (11). The first (8) and the second heat exchanger (11) are arranged inside the boiler, and the third heat exchanger (15) and the auxiliary circuit (18) are arranged outside the boiler (2).

## Description

### Field of the invention

The present invention generally relates to the technical field of purifying water and contaminated liquids and it particularly relates to an apparatus for purifying contaminated liquids by superheating steam.

The invention also relates to a method of using the apparatus mentioned above for the purification of contaminated liquids through the low-cost superheating of steam.

### Background art

Apparatuses for purifying water and contaminated liquids in order to obtain a liquid that is easy to use or disposed in accordance with the parameters of the applicable legislation, have been known long since.

The method most used by prior art apparatuses is distillation, which uses energy sources of various types.

The method usually involves heating the contaminated liquid with a boiler with a first heating device so as to boil the liquid and form steam. The steam is then condensed into a condenser to obtain a purified liquid with a certain degree of purity.

In order to improve the efficiency of the purification, there have been developed apparatuses which, besides using the first heating device, provide the use of a second heater used to superheat the steam to a temperature higher than the evaporation temperature.

One drawback of such known apparatuses lies in the fact that superheating the steam can create foams and therefore there arises the need to provide for filters before the purified liquid is stored in a tank.

Water purification may also regard desalination. One type of desalination apparatuses uses the evaporation of water introduced into the plant which is recovered by condensation, and which produces a discharge of water with higher salinity than the supply salty water.

Desalination machines operate at relatively high temperatures, that is between 40°C and 200°C, and therefore need, at least in some parts, to be made of special materials, such as austenitic-ferritic steels, Cu-Ni alloys, or titanium alloys, due to alkaline corrosion due to sodium chloride.

There are mainly three types of desalination machines, the reverse osmosis, multiflash and compression desalination machines. The latter method, for example disclosed in US 5346592 and GB 1233005, is extremely expensive due to the need to compress steam with enormous energy expenditure.

Various types of water purification apparatuses have been proposed to provide drinking or unpolluted water at home, on board ships or in industrial environments. Many of these prior art devices require essentially continuous operation to ensure efficiency, others require substantial investment and others require extensive periodic maintenance.

### Technical problem

In the light of the prior art, the technical problem addressed by the present invention is to reduce the energy to be supplied to the apparatus in any form, in particular in the form of mechanical compression, in order to obtain an effective purification at reasonable cost.

### Summary of the invention

The object of the present invention is to solve the aforementioned problem by providing an apparatus for the evaporation and purification of contaminated liquids which is highly efficient and cost-effective.

Another object is to provide an evaporation and purification apparatus that allows to rapidly and effectively evaporate water containing impurities without contaminating the steam.

Another object is to provide an evaporation and purification apparatus that allows to recover part of the latent evaporation heat in order to reduce the energy consumption of the apparatus avoiding the use of mechanical compressors.

These and other objects which will be more apparent hereinafter, are achieved by a purification apparatus according to the independent claim 1.

Thanks to the combination of characteristics and the circuit diagram claimed, the superheating of steam is obtained without expensive mechanical compression actions and at the expense of an external power source of any kind, at a low cost and with low environmental impact, such as for example renewable energy sources such as photovoltaic panels, wind generators and the like.

Advantageous embodiments of the invention are attained according to the dependent claims outlined below.

In an embodiment, the auxiliary circuit comprises a first closed loop adapted to connect the heat source with a first exchanger and a second closed loop adapted to connect the heat source with the third exchanger.

In an embodiment, the auxiliary circuit comprises valve means for selectively connecting the external heat source with the first, respectively the third exchanger.

In an embodiment, the valve means comprise a first controlled valve arranged along the first closed loop for placing the external heat source in fluidic communication with the first heat exchanger during a start-up step in order to evaporate the contaminated liquid introduced into the boiler.

In an embodiment, the valve means comprise a second controlled valve arranged along the second closed loop for placing the external heat source in fluidic communication with the third heat exchanger at steady-state operation to superheat the steam before it is conveyed to the second heat exchanger and to the condenser.

In an embodiment, the second condenser exchanger has a first circuit with a supply duct for a line for supplying the contaminated liquid and in fluidic communication with the inner compartment of the boiler and a second circuit in fluidic communication with the second exchanger and having a discharge duct for the purified liquid.

In an embodiment, there is provided a fourth heat exchanger coming from the second exchanger and preheat the contaminated in the second circuit before it is conveyed to the inner compartment of the boiler.

In an embodiment, the heat source uses a heating member selected from the group comprising a resistive member supplied by a power line or by a wind generator, at least one solar panel or a combustion burner.

Suitably, the contaminated liquid line is connected to a wastewater or contaminated water tank, or tank of water to be desalinated or purified.

In an embodiment, at the outlet of the condenser there is arranged a volumetric pump, preferably of the screw type, to facilitate the outflow of the purified liquid and to create a vacuum sufficient to compensate for the pressure drops in the circuit.

In another aspect of the invention, the apparatus described above allows to obtain a method for purifying contaminated liquids according to the attached claim 13.

### Brief description of the drawings

A further characteristics and advantages of the invention will be more apparent in the light of the detailed description of a method and an apparatus for the evaporation and purification of contaminated liquids, by way of non-limiting example with reference to the drawings below, wherein:

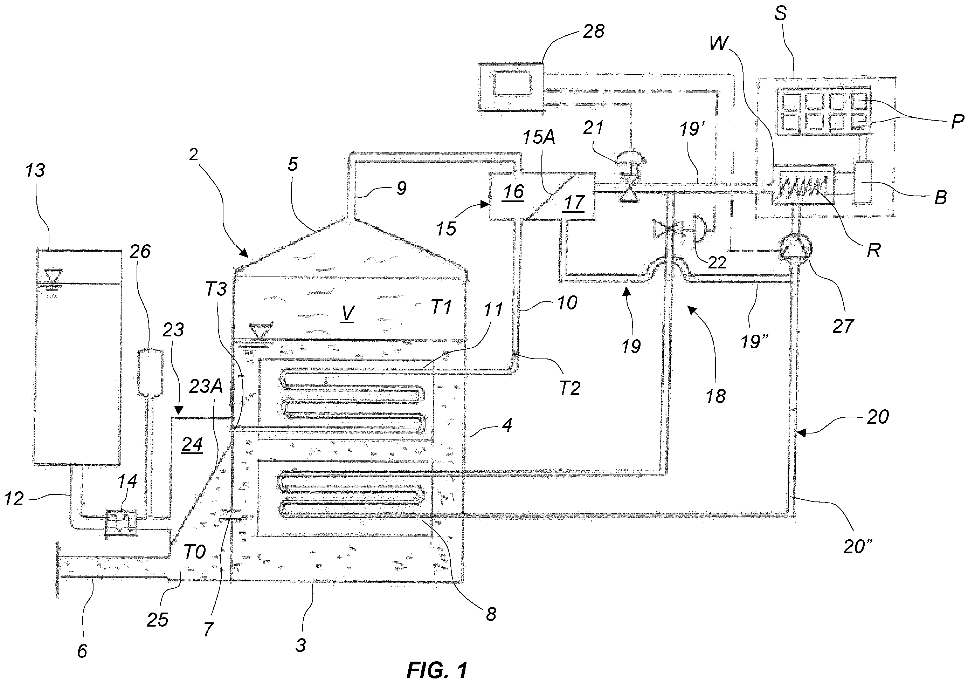

**FIG.** 1 is a schematic and functional view of the apparatus according to the invention;
**FIG.** 2 is a block flow diagram of the method of use of the apparatus of FIG. 1.

With reference to the mentioned figures, there is shown an apparatus for purifying contaminated liquids, indicated in their entirety with reference numeral 1, which essentially comprises a hermetically sealed boiler 2 and having an internal compartment defined by a bottom wall 3, a side wall 4 and an upper wall 5.

In the internal compartment V of the boiler 2 there is introduced a contaminated liquid L coming from a line of civil or industrial wastewater, or water to be desalinated or to be purified, passing through a supply duct 6 and an internal passage 7.

In the boiler 2 there is housed a first heat exchanger 8 which receives heat from an external heat source which will be described hereinafter, and transfers the heat to the contaminated liquid L to boil and evaporate it to a temperature T1 of about 100°C when starting the apparatus.

The steam collected at the roof of the boiler 2 is collected through a collection duct 9 and it is conveyed through a pipe 10 to a second heat exchanger 11 which is configured to transfer heat to the liquid L and recover the latent heat of the steam. Basically, in this second exchanger 11 the temperature at the outlet T3 is a few degrees lower than 100°C so as to condensate the steam substantially free of contaminants and therefore purified.

The condensed and purified liquid C is conveyed through a discharge duct 12 towards a storage tank 13. In order to facilitate discharge, in the discharge duct 12 there is arranged a volumetric pump 14, preferably of the screw type, which creates a vacuum of about 0.5 bar sufficient to circulate the liquid compensating for the pressure drops in the circuit.

According to a peculiar characteristic of the invention, the apparatus comprises a third heat exchanger 15 arranged along the collection duct 9 and having two portions 16, 17 respectively, schematically separated by an exchange wall 15A.

The third exchanger 15 is configured to enable the steam coming from the collection duct 9 which is at a temperature T1 of about 100°C to flow into the portion 16 and superheat it by contact with the exchange wall 15A to bring it to a relatively high temperature T2 equal to about 110°C.

The steam is superheated by the heat exchange at the expense of an exchange liquid E which flows into the portion 17 of the third exchanger 15 and it comes from an auxiliary circuit, generally indicated with 18, which will be described in greater detail below.

The exchange liquid E in turn receives heat from an external heat source, schematically enclosed in a rectangle with a discontinuous line and not part of the invention, generally indicated with the symbol S.

By way of non-limiting example, the external heat source S may be of any type and it may comprise a casing W which encloses the heating member R, for example a resistive member supplied by a power line in turn connected with a junction box B operatively connected with one or more photovoltaic panels P, or with a wind generator, not shown in the drawings, which may be arranged in the immediate vicinity of the apparatus and they contribute to reducing the environmental impact and facilitating green economy.

By way of example, a small desalination apparatus could be positioned at the seashore in areas not supplied with electrical energy, to produce drinking water or provide water for farming.

By way of precaution, there could be provided for a generator assembly or several buffer batteries in order to compensate for lack of or insufficient solar irradiation for short temporary periods.

Thanks to an appropriate choice and skilful dimensioning of these sources of alternative energy, the exchange fluid in the auxiliary circuit 18 may be brought to a temperature even significantly greater than 100°C, for example to 130 -150°C in a relatively simple and cost-effective manner so as to increase heat exchange in the third heat exchanger 15. All this, without using expensive forms of energy, for example mechanical compression.

In a preferred embodiment, the first exchanger 8 and the second exchanger 11 are fully arranged in the boiler 2, while the third exchanger 15 and the auxiliary circuit 18 are arranged outside the boiler 2.

Furthermore, the auxiliary circuit 18 is configured to place the external heat source S temporarily in fluidic communication with the first exchanger 8 to convey the evaporation of the contaminated liquid L and in fluidic communication with the third exchanger 18 at steady-state operation to superheat the steam before conveying to the second exchanger 11.

In an embodiment, the auxiliary circuit 18 may comprise two closed loops 19, 20.

In particular, the first closed loop 19 comprises a delivery branch 19' from the casing T of the external heat source S to the first heat exchanger and a return branch 19" from the first exchanger 8 to the external heat source S.

The second closed loop 20 comprises a delivery branch 20' of the fluid from the casing T of the external heat source S to the hot portion 17 of the third exchanger 15 and a return branch 20" for the fluid from the hot portion 17 of the third heat exchanger 15.

In order to selectively connect, the external heat source S with the first heat exchanger 8 or with the third heat exchanger 15, there are provided valve means arranged along the closed loops 19, 20.

In an embodiment, the valve means comprise at least one first controlled valve 21 arranged along the delivery branch 20' of the first closed loop 22 and at least one second controlled valve 22 arranged along the delivery branch 20' of the second closed loop 20.

By keeping the first valve 21 closed and the second valve 22 open, the exchange fluid circulates from the casing W to the first heat exchanger 8 so as to start the heating of the contaminated liquid L in the boiler 2 and evaporate it in a first step of the process.

After this initial step, the first valve 21 is opened and the second valve 22 is closed so that the exchange fluid circulates from the casing T to the hot portion of the third heat exchanger 15 to superheat the steam coming from the collection duct 9 and convey it to the second heat exchanger 11, generating a superheating of the steam. This is cooled along the path thereof in the same exchanger 11 up to the temperature T3 a few degrees lower than 100°C until it is condensed and purified.

In an embodiment, the apparatus 1 comprises a fourth heat exchanger 23 which is schematically shown as a container, partitioned by a partitioning wall 23A into a hot portion 24 in fluidic communication with the exchanger 11 and a cold portion 25 that is at a relatively low temperature.

The contaminated supply liquid L enters into the cold portion 25 at a room temperature T0, for example close to 15 °C through the supply duct 6 and the passage 7 which places the cold portion 25 in fluidic communication with the internal compartment V of the boiler 2. The heat exchange through the wall in the fourth exchanger 23 allows the cold liquid flowing in from the supply duct 6 at temperature T0 to be pre-heated and brought to a boiling temperature as it progressively touches the outer wall of the first exchanger 8.

For the sake of completeness, before the pump 14 there is arranged a small expansion tank 26 and before the inflow of the exchange liquid into the external heat source S there is provided a pump or circulating device 27 which is always operating to circulate the exchange fluid in the auxiliary circuit.

Furthermore, the apparatus may provide a PLC or electronic microcontroller 28 electrically connected to the two valves 21, 22 and to the pump 27 to control the actuation thereof.

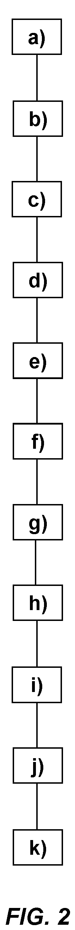

In the practical embodiment, the apparatus provides a method for purifying contaminated liquids comprising the following steps, schematically shown in FIG. 2:
a) providing a boiler 2 and supplying it with a contaminated liquid L at room temperature T0;
b) heating the contaminated liquid by means of a second heat exchanger 11 and evaporating it at a temperature T1 of about 100°C;
c) conveying the steam at temperature T1 through a collection duct 9 from the roof of the boiler;
d) conveying the steam at temperature T1 to a third heat exchanger 15 to superheat it to a temperature T2 of about 110°C;
e) conveying the superheated steam at temperature T2 to the second heat exchanger 11 to cool it progressively until it reaches a condensation temperature T3 a few degrees lower than 100°C and condenses as a purified liquid C;
f) conveying the condensed and purified liquid C to a fourth heat exchanger 23 having a cold area 25 crossed by the contaminated liquid L which is supplied through a supply duct 6 and through a hot area 24 in which the liquid is preheated;
g) introducing the preheated contaminated liquid L into an internal compartment V of the boiler 2 to start a new steaming cycle; wherein
h) the exchange liquid E circulates in an auxiliary circuit 18 which receives heat from an external heat source S;
i) the heat received from the external heat source S is selectively transferred to the first heat exchanger 8 or to the third heat exchanger (15) respectively;
j) the exchange liquid E is selectively circulated in a first closed loop 19 in fluidic communication with the external heat source S or in a second closed loop 20 in fluidic communication with the first heat exchanger 8;
k) the selective circulation of the exchange liquid E is carried out by actuating on command a first motorized valve 21 arranged along the delivery branch 19' of the first closed loop 19 or by actuating a second motorized valve 22 arranged in the delivery branch 20' of the second closed loop 20.

Lastly, there should be borne in mind some of the countless embodiments of the apparatus and method according to the invention which allows to consistently reduce the required energy:
- purifying wastewater with non-removable pollutants using conventional methods, for example biological, chemical-physical, with reverse osmosis membrane (RO) and with ultrafiltration (UF),
- drying sludge using purification plants,
- industrial desiccation of food products,
- desalination

In the light of the above, it is clear that the apparatus and the method for purifying contaminated liquids according to the invention achieves the preestablished objects and in particular it allows to reduce the energy required for the implementation thereof in any form to obtain an effective purification at reasonable costs.

### Industrial applicability

The present invention can be applied at industrial level because the apparatus for purifying contaminated liquids can be manufactured on an industrial scale by industries belonging to the water purification industry.

## Claims

1. An apparatus for purifying contaminated liquids, comprising:
- a boiler (2) adapted to receive a contaminated liquid (L);
- a first heat exchanger (8) configured to heat the contaminated liquid and evaporate it;
- a collection duct (9) for collecting the steam produced in the boiler;
- a second heat exchanger (11) configured to recover the latent heat of evaporation and condensation coming from the collection duct (9);
- an duct (12) for discharging the purified liquid (C);
**characterised in that** a third heat exchanger (15) adapted to receive heat from an auxiliary circuit (18) crossed by an exchange liquid that is in contact with an external heat source (S) and to transfer the heat to the steam coming from the collection duct (9) and to superheat it before entering into the second heat exchanger (11), said auxiliary circuit (18) being configured to be temporarily in fluidic communication with the first heat exchanger (8) and in fluidic communication with the third heat exchanger (15) at steady-state operation to superheat the steam before the latter is conveyed to the second heat exchanger (11) without any mechanical compression.

2. Apparatus as claimed in claim 1, **characterized in that** the auxiliary circuit (18) comprises a first closed loop (19) adapted to connect the external heat source (S) with the first heat exchanger (8) and a second closed loop (20) adapted to connect the external heat source (S) with the third heat exchanger (15).

3. Apparatus as claimed in claim 1, **characterised in that** the auxiliary circuit (18) comprises valve means for selectively connecting the external heat source (S) with the first (8), or respectively with the third heat exchanger (15).

4. Apparatus as claimed in claim 3, **characterised in that** valve means comprise a first controlled valve (21) arranged along the first closed loop (19) for fluidly connecting the external heat source (S) with the first heat exchanger (8) during a start-up step in order to evaporate the contaminated liquid into the boiler (2).

5. Apparatus as claimed in claim 3, **characterised in that** the valve means comprise a second controlled valve (22) arranged along the second closed loop (20) for fluidly connecting the external heat source (S) with the third heat exchanger (15) at steady-state operation to superheat the steam before it is conveyed to the second heat exchanger (11).

6. Apparatus as claimed in claim 1, **characterised in that** the first (8) and the second heat exchanger (11) are inside the boiler (2), and wherein the third heat exchanger (15) and the auxiliary circuit (18) are arranged outside the boiler (2).

7. Apparatus as claimed in claim 1, **characterised in that** it comprises a fourth heat exchanger (23) having a first portion (24) in fluidic communication with the second heat exchanger (11) and a second portion (25) in fluidic communication with an internal compartment (V) of the boiler (2), said second portion (25) having a supply duct (6) for supplying the contaminated liquid (L).

8. Apparatus as claimed in one or more of the preceding claims, **characterised in that** it comprises a pump (27) for circulating the exchange liquid in said auxiliary circuit (18), said pump (27) being arranged in said first closed loop upstream of said external heat source (S).

9. Apparatus as claimed in claim 1, **characterised in that** an expansion tank (26) is arranged downstream of said fourth heat exchanger (23).

10. Apparatus as claimed in claim 1, **characterised in that** the second heat exchanger (11) is configured to recover the latent evaporation heat of the steam coming from the collection duct (9) and condense the contaminated liquid (L) before conveying it to the fourth heat exchanger (23).

11. Apparatus as claimed in claim 1, **characterised in that** the external heat source (S) has a heating member (R) selected from the group comprising the resistive elements powered by an electric line with at least one solar panel, a wind generator or a combustion burner.

12. Apparatus as claimed in claim 1, **characterised in that** a volumetric pump (14) of the screw type is provided at the outlet of the fourth heat exchanger (23) to promote the outflow of the purified liquid and compensate for the pressure drops along the circuit.

13. A method for purifying contaminated liquids by means of an apparatus as claimed in one or more of the preceding claims, comprising at least the following steps:
a) providing a boiler (2) and supplying it with a contaminated liquid (L) at room temperature (T0);
b) heating the contaminated liquid by means of a second heat exchanger (11) and evaporating it at an evaporation temperature (T1);
c) conveying the steam from the boiler (2) at evaporation temperature (T1) through a collection duct (9) from the top (5) of the boiler (2);
d) conveying the steam at temperature (T1) to a third heat exchanger (15) to be superheated to a temperature (T2) of about 110°C;
e) conveying the superheated steam at temperature (T2) to the second heat exchanger (11) to cool it progressively until the steam reaches a condensation temperature (T3) a few degrees lower than 100°C and promote condensation of the steam as a purified liquid (C);
f) conveying the purified liquid (C) to a fourth heat exchanger (23) having a cold area (25) crossed by the contaminated liquid (L) which is supplied through a supply duct (6) and through a hot area (24) in which the liquid is preheated;
g) introducing the preheated contaminated liquid into an internal compartment (V) of the boiler (2) to start a new steaming cycle; wherein
h) the exchange liquid (E) circulates in an auxiliary circuit (18) which receives heat from an external heat source (S);
i) the heat received from the external heat source (S) is selectively transferred to the first heat exchanger (8) or to the third heat exchanger (15) respectively, without using mechanical compression.

14. Method as claimed in claim 13, wherein there are further provided the following steps:
j) the exchange liquid (E) is selectively circulated in a first closed loop (19) in fluidic communication with the external heat source (S) or in a second closed loop (20) in fluidic communication with the first heat exchanger (8);
k) the selective circulation of the exchange liquid (E) is carried out by actuating on command a first motorized valve (21) arranged along the delivery branch (19') of the first closed loop (19) or by actuating a second motorized valve (22) arranged in the delivery branch (20') of the second closed loop (20).
